# EUROPÄISCHE PATENTSCHRIFT

(11) **EP 3 453 488 B1**
(45) Veröffentlichungstag und Bekanntmachung des Hinweises auf die Patenterteilung: **15.09.2021**
(21) Anmeldenummer: 18177660.0
(22) Anmeldetag: 14.06.2018
(51) Int. Cl.: B23Q 39/02, B27C 9/04

(54) **PLATTENBEARBEITUNGSANLAGE**
BOARD TREATMENT DEVICE
INSTALLATION D'USINAGE DE PLAQUES

(30) Priorität: 06.09.2017 DE 102017120471
(43) Veröffentlichungstag der Anmeldung: 13.03.2019
(73) Patentinhaber: Hundegger, Hans, 87749 Hawangen (DE)
(72) Erfinder: Hundegger, Hans, 87749 Hawangen (DE)
(74) Vertreter: Charrier Rapp & Liebau

(56) Entgegenhaltungen:
- EP-A2- 1 405 693
- EP-A2- 2 353 820

## Beschreibung

Die Erfindung betrifft eine Plattenbearbeitungsanlage nach dem Oberbegriff des Anspruchs 1. Plattenbearbeitungsanlagen werden aufgrund der großen Abmessungen der zu bearbeitenden Bauteile und der dadurch erforderlichen großen Verfahrwege üblicherweise in Portalbauweise ausgeführt. Dabei wird das auf einem Bearbeitungstisch horizontal aufliegende Werkstück von einem Portal überspannt, an dem die in mehreren Achsen beweglichen Bearbeitungsaggregate angeordnet sind.

Aus der EP 1 405 693 A2, die die Basis für den Oberbegriff des Anspruchs 1 bildet, ist eine Holzbearbeitungsanlage mit einer Bearbeitungsstation und einer Transporteinrichtung zur gesteuerten Verschiebung eines Werkstücks in einer ersten Linearachse während der Bearbeitung des Werkstücks in der Bearbeitungsstation bekannt. Die Transporteinrichtung weist zwei voneinander beabstandete Transporteinheiten zur Verschiebung des Werkstücks über einen Zwischenraum zwischen den Transporteinheiten hinweg auf. Die Bearbeitungsstation umfasst ein oberhalb des Werkstücks angeordnetes Sägeaggregat und ein unterhalb des Werkstücks angeordnetes Bohr- und Fräsaggregat. Die Holzbearbeitungsanlage ist für einen schnellen und präzisen Zuschnitt und einfache Bohr-und Fräsbearbeitungen von Kanthölzern und schmalen Brettern konzipiert, mit den beiden Bearbeitungsaggregaten können jedoch nicht sämtliche Bearbeitungen an allen sechs Seiten eines plattenförmigen Werkstücks durchgeführt werden.

Aufgabe der Erfindung ist es, eine Plattenbearbeitungsanlage der eingangs genannten Art zu schaffen, die eine effektive 6-Seiten Bearbeitung von plattenförmigen Werkstücken auf deren gesamten Länge auch ohne Wenden oder Umkanten der Werkstücke ermöglicht.

Diese Aufgabe wird durch eine Plattenbearbeitungsanlage mit den Merkmalen des Anspruchs 1 gelöst. Zweckmäßige Weiterbildungen und vorteilhafte Ausführungsformen der Erfindung sind Gegenstand der Unteransprüche.

Die erfindungsgemäße Plattenbearbeitungsanlage weist eine Bearbeitungsstation zur Bearbeitung eines plattenförmigen Werkstücks und eine Transporteinrichtung zur gesteuerten Verschiebung des Werkstücks in mindestens einer ersten Linearachse während der Bearbeitung des Werkstücks durch die Bearbeitungsstation auf. Die Transporteinrichtung enthält zwei voneinander beabstandeten Transporteinheiten zur Verschiebung des plattenförmigen Werkstücks über einen Zwischenraum zwischen den beiden Transporteinheiten. Die Bearbeitungsstation enthält zwei an dem Zwischenraum einander gegenüberliegend angeordnete Bearbeitungsaggregate, die jeweils einen in der zur ersten Linearachse rechtwinkligen zweiten Linearachse und einer zu der ersten und zweiten Linearachse rechtwinkligen dritten Linearachse innerhalb des Zwischenraums über und unter dem Werkstück verfahrbaren horizontalen Querträger aufweisen. An dem Querträger ist jeweils eine um mindestens zwei Drehachsen drehbare Bearbeitungseinheit zur Aufnahme eines Werkzeugs angeordnet.

Bei der erfindungsgemäßen Plattenbearbeitungsanlage sind die Werkstücke über den Zwischenraum zwischen den beiden Transporteinheiten von unten zugänglich. Dadurch können die Bearbeitungseinheiten der gegenüberliegenden Bearbeitungsaggregate nicht nur über der Oberseite des Werkstücks verfahren, sondern können auch zur Unterseite der Werkstücke gelangen und dort auch komplexere Bearbeitungsaufgaben übernehmen. Das plattenförmige Werkstück kann so auf der gesamten Länge und auch auf der gesamten Breite von zwei gegenüberliegenden Seiten her gleichzeitig bearbeitet werden, so dass keine großen Verfahrwege benötigt werden. Dadurch kann eine besonders effektive Bearbeitung auch großformatiger Platten an allen sechs Seiten erfolgen. Da die Bearbeitungseinheiten mit den daran angeordneten Werkzeugen nicht über die gesamte Breite des plattenförmigen Werkstücks bewegt und dadurch auch nicht so weit frei auskragen müssen, kann eine hohe Stabilität und Genauigkeit erreicht werden.

An dem Querträger kann die Bearbeitungseinheit um zwei oder drei Drehachsen drehbar angeordnet sein.

Die Bearbeitungseinheit kann zweckmäßigerweise an dem freien Ende eines an dem Querträger um eine erste Drehachse und eine zur ersten Drehachse senkrechte zweite Drehachse drehbaren Arms um eine von der ersten Drehachse beabstandete dritte Drehachse schwenkbar angeordnet sein.

In einer bevorzugten Ausführung kann der Arm auf einer Abstützfläche eines von dem Querträger horizontal vorstehenden Trägerteils um 360° drehbar angeordnet sein. Auch ohne größere Verfahr- und Schwenkbewegungen der Bearbeitungseinheit können so alle erforderlichen Bearbeitungen an den Ober- und Unterseiten, den Seitenflächen und den Stirnseiten eines plattenförmigen Werkstücks ohne Umkanten durchgeführt werden.

Der Arm ist zweckmäßigerweise winkelförmig ausgebildet und weist einen auf der Abstützfläche des Trägerteils angeordneten unteren Schenkel sowie ein dazu rechtwinkliges, von dem Trägerteil seitlich auskragendes Stützteil auf. An einer inneren Anlagefläche des Stützteils kann die um die dritte Drehachse (C-Achse) drehbare Bearbeitungseinheit angeordnet sein.

In einer vorteilhaften Ausführung kann der Arm derart auf dem Trägerteil angeordnet sein, dass eine Achse eines in der Bearbeitungseinheit angeordneten Werkzeugs in derselben Ebene mit der zweiten Drehachse liegt. Dadurch kann die Ansteuerung vereinfacht und der Programmieraufwand verringert werden. Zweckmäßigerweise ist der Arm außerdem so auf dem Trägerteil angeordnet, dass die zweite Drehachse und die dritte Drehachse in einer Ebene liegen.

Die für die Verschiebung des Werkstücks entlang der ersten Linearachse konzipierten Transporteinheiten enthalten zweckmäßigerweise mehrere mit einer Auflage versehene Transportbänder oder Transportketten, die umlaufend über vordere und hintere Umlenkrollen geführt sind. Die Transporteinrichtung kann aber auch anders ausgestaltet sein.

Zweckmäßigerweise ist zwischen den Transportbändern oder Transportketten mindestens eine Messvorrichtung zur Erfassung und Steuerung der Vorschubbewegung des Werkstücks mittels einer Steuereinheit angeordnet.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Teil einer Plattenbearbeitungsanlage bei der Bearbeitung einer Oberseite eines Werkstücks;

- **Figur 2**: eine vergrößerte Teilansicht der Plattenbearbeitungsanlage von Figur 1;
- **Figur 3**: einen Teil der Plattenbearbeitungsanlage von Figur 1 bei der Bearbeitung einer Unterseite eines Werkstücks;
- **Figur 4**: einen Teil der Plattenbearbeitungsanlage von Figur 1 bei der Bearbeitung der Seitenflächen eines Werkstücks und
- **Figur 5**: einen Teil der Plattenbearbeitungsanlage von Figur 1 bei der Bearbeitung der Stirnflächen eines Werkstücks.

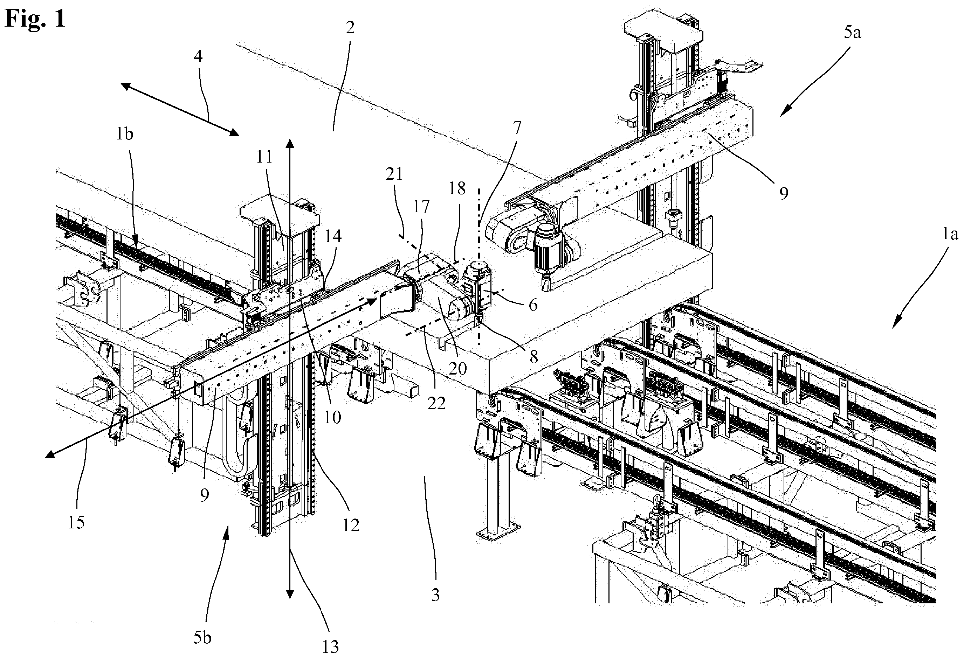

Die in Figur 1 in einer Perspektive zum Teil dargestellte Plattenbearbeitungsanlage ist für eine 6-Seiten-Bearbeitung von plattenförmigen Holzbauteilen oder dgl. konzipiert. Sie enthält eine Transporteinrichtung mit zwei voneinander beabstandeten Transporteinheiten 1a und 1b, durch die ein plattenförmiges Werkstück 2 über einen Zwischenraum 3 zwischen den beiden Transporteinheiten 1a und 1b hinweg entlang einer ersten Linearachse 4 (X-Achse) bahngesteuert bzw. geregelt verschoben werden kann.

An dem Zwischenraum 3 zwischen den beiden Transporteinheiten 1a und 1b ist eine Bearbeitungsstation mit zwei gegenüberliegenden Bearbeitungsaggregaten 5a und 5b angeordnet. Die beiden Bearbeitungsaggregate 5a und 5b enthalten jeweils eine in mehreren Achsen bewegliche Bearbeitungseinheit 6, die bei der gezeigten Ausführung als Motorspindel zur Aufnahme eines um eine Achse 7 drehbaren und rotatorisch angetriebenen Werkzeugs 8 ausgebildet ist. Die Bearbeitungseinheit 6 weist also eine direkt angetriebene Welle mit einer integrierten Werkzeugschnittstelle auf.

Zur Bewegung der Bearbeitungseinheit 6 in mehreren Achsen enthalten die Bearbeitungsaggregate 5a und 5b einen rechtwinklig zur ersten Linearachse 4 angeordneten horizontalen Querträger 9, der über einen Schlitten 10 horizontal und vertikal verfahrbar an einem Gestell 11 angeordnet ist. Der Querträger 9 ist bei der gezeigten Ausführung als rechtwinklig zur ersten Linearachse 4 (X-Achse) verlaufender horizontaler Querträger ausgeführt. Das Gestell 11 ist stationär ausgebildet, könnte in einer weiteren Ausbaustufe aber auch in der X-Achse verfahrbar sein. Der Schlitten 10 ist über vertikale Führungsschienen 12 an dem Gestell 11 in einer zur ersten Linearachse 4 (X-Achse) rechtwinkligen zweiten Linearachse 13 (Z-Achse) vertikal verschiebbar angeordnet. Über horizontale Führungsschienen 14 ist der Querträger 9 am Schlitten 10 in einer zu der ersten und zweiten Linearachse 4 bzw. 13 rechtwinkligen dritten Linearachse 15 (Y-Achse) horizontal verfahrbar.

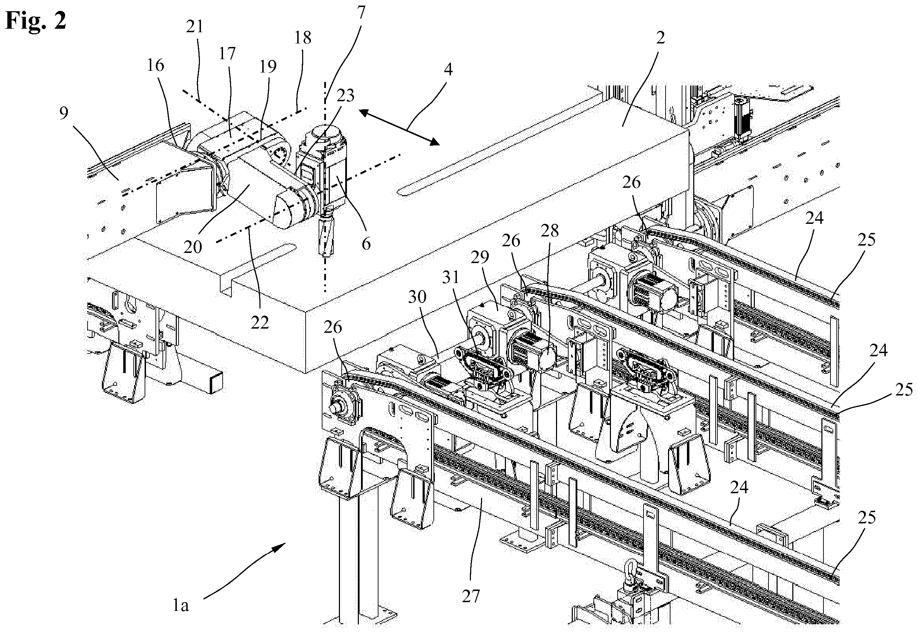

Wie besonders aus Figur 2 hervorgeht, ist an einer vorderen Stirnseite 16 der einander zugewandten vorderen Enden der horizontalen Querträger 9 ein horizontal auskragendes vorderes Trägerteil 17 um eine zu der ersten Linearachse (X-Achse) rechtwinklige erste Drehachse 18 (A-Achse) drehbar angeordnet. Das durch einen Motor drehbare Trägerteil 17 ist als ein von der vorderen Stirnseite 16 vorstehender horizontaler Stützkörper mit einer zur ersten Drehachse 18 (A-Achse) parallelen Abstützfläche 19 ausgeführt. Auf der Abstützfläche 19 des Trägerteils 17 ist ein winkelförmiger Arm 20 um eine zur ersten Drehachse 18 (A-Achse) rechtwinklige zweite Drehachse 21 (B-Achse) um 360° schwenkbar angeordnet.

An dem vom Trägerteil 17 seitlich auskragenden freien Ende der um die zweite Drehachse (B-Achse) ebenfalls motorisch schwenkbaren Arms 20 ist die als Motorspindel ausgebildete Bearbeitungseinheit 6 um eine von der ersten Drehachse 18 (A-Achse) beabstandete und zur zweiten Drehachse 21 (B-Achse) rechtwinklige dritte Drehachse 22 (C-Achse) drehbar angeordnet. Die Bearbeitungseinheit 6 ist an einer zur Abstützfläche 22 rechtwinkligen inneren Anlagefläche 23 des winkelförmigen Arms 20 angeordnet. Über den winkelförmigen Arm 20 ist die dritte Drehachse 22 (C-Achse) parallel zu der ersten Drehachse 18 (A-Achse) angeordnet. Die Bearbeitungseinheit 13 ist über einen Motor um die dritte Drehachse 22 (C-Achse) drehbar. Sämtliche Antriebsmotoren sind gesteuert, so dass die Bearbeitungseinheit 6 eine gesteuerte Bewegung gegenüber dem Werkstück 2 ausführen kann. In der als Motorspindel ausgeführten Bearbeitungseinheit 6 ist ein Fräser, ein Bohrer oder ein anderes, um die Achse 7 motorisch drehbares und rotatorisch angetriebenes Werkzeug 8 eingesetzt. Die als Antriebsachse für das rotierende Werkzeug 8 dienende Achse 7 ist rechtwinklig zur dritten Drehachse 22 (C-Achse) ausgerichtet.

Der Arm 20 könnte auch fest an dem Trägerteil 17 angeordnet sein, so dass die Bearbeitungseinheit 6 nur um die beiden Drehachsen 18 und 22 drehbar ist.

Aus Figur 2 ist ersichtlich, dass die Transporteinheit 1a mehrere mit einer Auflage 24 versehene Transportbänder oder Transportketten 25 enthält. Die zueinander parallelen, horizontal verlaufenden Transportbänder oder Transportketten 25 sind umlaufend um vordere und hintere Umlenkrollen 26 geführt. Die Umlenkrollen 26 und die darüber geführten Transportbänder oder Transportketten 25 sind an einem hier als Stahlkonstruktion ausgeführten Rahmen 27 angeordnet. Durch Antrieb der Umlenkrollen 26 werden die über die Umlenkrollen 26 geführten Transportbänder oder Transportketten 25 bewegt, wodurch ein auf den Auflagen 24 der Transportbänder oder Transportketten 25 aufliegendes plattenförmiges Werkstück 2 in Richtung der ersten Linearachse 4 verschoben wird. Die Umlenkrollen 26 werden durch entsprechende Motoren 28 über Getriebe 29 und Antriebswellen 30 angetrieben.

Zwischen den Transportbändern oder Transportketten 25 sind spezielle Messvorrichtungen 31 zur Erfassung der Vorschubbewegung des Werkstücks 2 angeordnet. Diese weisen einen an einem Träger über Umlenkrollen geführten Riemen oder eine Kette, eine mit dem Riemen bzw. der Kette mitbewegte Andruckeinrichtung zum Andrücken des Riemens bzw. der Kette gegen die Unterseite des Werkstücks 2 und einen Sensor zur Erfassung der Bewegung des Riemens oder der Kette auf. Durch die mitbewegten Andruckelemente kann der Riemen oder die Kette zur Erzielung einer schlupffreien Verbindung mit dem Werkstück 2 an dieses angepresst werden, ohne dass eine Gleitreibung zwischen dem Andruckelement und dem Riemen bzw. der Kette auftritt. Einzelheiten der Messvorrichtung sind in der DE 10 2013 104 241 A1 offenbart. Auf diese Druckschrift wird bezüglich der Merkmale der Messvorrichtung ausdrücklich Bezug genommen.

Mit Hilfe der beiden gegenüberliegenden Bearbeitungsaggregate 5a und 5b können durch die vorstehend beschriebene Plattenbearbeitungsvorrichtung auch großformatige, plattenförmige Werkstücke 2 auf besonders effektive Weise an allen sechs Seiten bearbeitet werden. Die Werkzeuge 8 müssen nicht über die gesamte Breite des Werkstücks 2 verfahren werden, so dass die Querträger 9 nicht so weit auskragen müssen und dadurch die Stabilität und Bearbeitungsgenauigkeit verbessert werden kann. So können z.B. auf der Oberseite eines plattenförmigen Werkstücks 2 über die gesamte Breite verlaufende Quernuten hergestellt werden, wie dies in Figur 1 gezeigt ist.

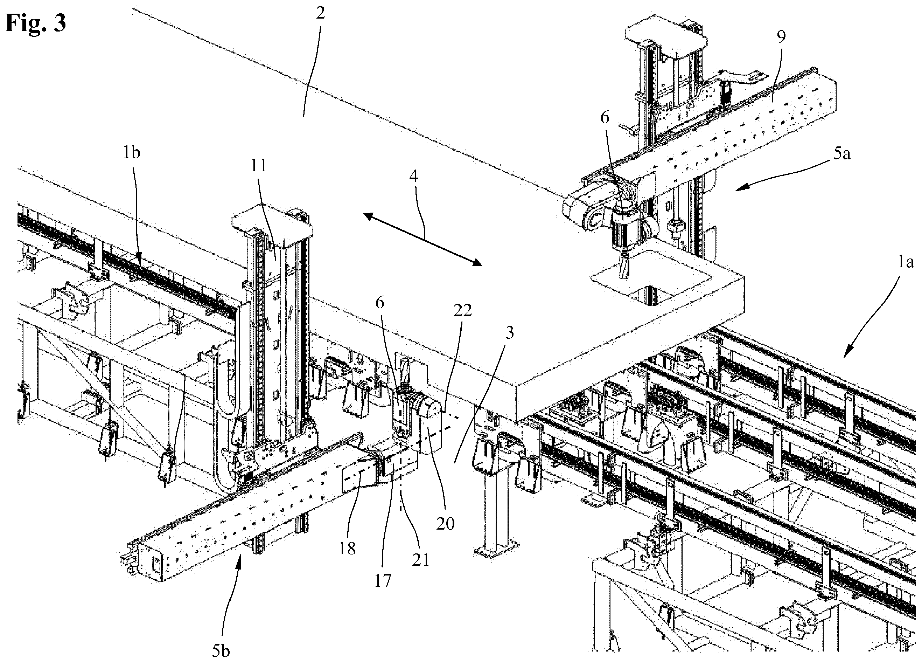

Durch Absenken des Querträgers 9 und entsprechendes Verfahren unter dem Werkstück 2 innerhalb des Zwischenraums 3 können auch Bearbeitungen an der Unterseite des Werkstücks 2 ausgeführt werden, wie dies in Figur 3 gezeigt ist. Hierzu kann das Trägerteil 17 in der gezeigten Weise um die erste Drehachse 18, der Arm 20 um die zweite Drehachse 21 und die Bearbeitungseinheit 6 um die dritte Drehachse 22 gedreht werden.

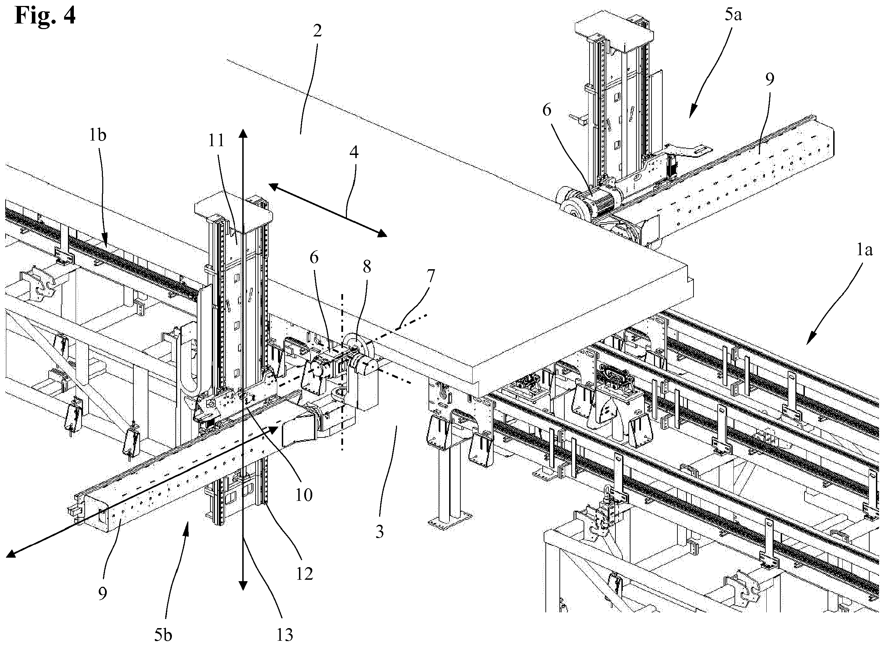

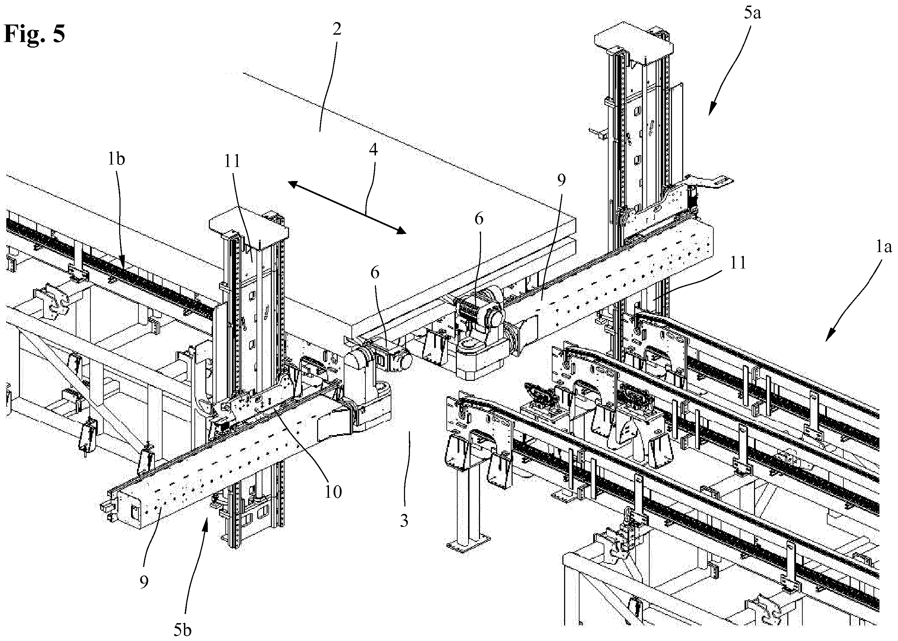

Weiterhin können gemäß Figur 4 auch die beiden Seitenflächen des Werkstücks 2 bearbeitet werden. Bei der Figur 4 ist beispielsweise in die Bearbeitungseinheiten 6 der beiden Bearbeitungsaggregate 5a und 5b jeweils ein Walzenfräser eingesetzt. Dadurch können z.B. Abstufungen an den Seitenflächen des Werkstücks 2 gefertigt werden. Durch entsprechende Verfahrbewegungen der Querträger 9 können außerdem die Stirnseiten des Werkstücks 2 bearbeitet werden, wie aus Figur 5 hervorgeht.

### Bezugszeichenliste

- 1a, 1b: Transporteinheit
- 2: Werkstück
- 3: Zwischenraum
- 4: Erste Linearachse
- 5a, 5b: Bearbeitungsaggregat
- 6: Bearbeitungseinheit
- 7: Achse
- 8: Werkzeug
- 9: Querträger
- 10: Schlitten
- 11: Gestell
- 12: Vertikale Führungsschiene
- 13: Zweite Linearachse
- 14: Horizontale Führungsschiene
- 15: Dritte Linearachse
- 16: Vordere Stirnseite
- 17: Trägerteil
- 18: Erste Drehachse
- 19: Abstützfläche
- 20: Arm
- 21: Zweite Drehachse
- 22: Dritte Drehachse
- 23: Anlagefläche
- 24: Auflage
- 25: Transportband oder Transportkette
- 26: Umlenkrollen
- 27: Rahmen
- 28: Motor
- 29: Getriebe
- 30: Antriebswelle
- 31: Messvorrichtung

## Patentansprüche

1. Plattenbearbeitungsanlage mit einer Bearbeitungsstation zur Bearbeitung eines plattenförmigen Werkstücks (2) und einer Transporteinrichtung zur gesteuerten Verschiebung des Werkstücks in mindestens einer ersten Linearachse (4) während der Bearbeitung des Werkstücks (2) durch die Bearbeitungsstation, wobei die Transporteinrichtung zwei voneinander beabstandete Transporteinheiten (1a, 1b) zur Verschiebung des plattenförmigen Werkstücks (2) über einen Zwischenraum (3) zwischen den beiden Transporteinheiten (1a, 1b) hinweg aufweist und die Bearbeitungsstation zwei an dem Zwischenraum (3) einander gegenüberliegend angeordnete Bearbeitungsaggregate (5a, 5b) enthält,. **dadurch gekennzeichnet, dass** die Bearbeitungsaggregate (5a, 5b) jeweils einen in einer zur ersten Linearachse (4) rechtwinkligen zweiten Linearachse (13) und einer zu der ersten und zweiten Linearachse (4, 13) rechtwinkligen dritten Linearachse (15) innerhalb des Zwischenraums (3) über und unter dem Werkstück (2) verfahrbaren horizontalen Querträger (9) aufweisen, an dem jeweils eine um mindestens zwei Drehachsen (18, 22) drehbare Bearbeitungseinheit (6) zur Aufnahme eines Werkzeugs (8) angeordnet ist.

2. Plattenbearbeitungsanlage nach Anspruch 1, **dadurch gekennzeichnet, dass** an den horizontalen Querträgern (9) jeweils eine Bearbeitungseinheit (6) um drei Drehachsen (18, 21, 22) drehbar angeordnet ist.

3. Plattenbearbeitungsanlage nach Anspruch 2, **dadurch gekennzeichnet, dass** die Bearbeitungseinheit (6) an dem freien Ende eines an dem Querträger (9) um eine erste Drehachse (18) und eine zur ersten Drehachse (18) senkrechte zweite Drehachse (21) drehbaren Arms (20) um eine von der ersten Drehachse (18) beabstandete dritte Drehachse (22) schwenkbar angeordnet ist.

4. Plattenbearbeitungsanlage nach Anspruch 3, **dadurch gekennzeichnet, dass** der Arm (20) auf einer Abstützfläche (19) eines von dem Querträger (9) horizontal vorstehenden Trägerteils (17) um 360° drehbar angeordnet ist.

5. Plattenbearbeitungsanlage nach Anspruch 4, **dadurch gekennzeichnet, dass** eine Achse (6) eines in der Bearbeitungseinheit (6) angeordneten Werkzeugs (8) in derselben Ebene mit der zweiten Drehachse (21) liegt.

6. Plattenbearbeitungsanlage nach Anspruch 4 oder 5, **dadurch gekennzeichnet, dass** der Arm (20) so auf dem Trägerteil (17) angeordnet ist, dass die zweite Drehachse (21) und die dritte Drehachse (22) in einer Ebene liegen.

7. Plattenbearbeitungsanlage nach einem der Ansprüche 1 bis 6, **dadurch gekennzeichnet, dass** die Transporteinheit (1a, 1b) mehrere mit einer Auflage (24) versehene Transportbänder oder Transportketten (25) enthält.

8. Plattenbearbeitungsanlage nach Anspruch 7, **dadurch gekennzeichnet, dass** die Transportbänder oder Transportketten (25) umlaufend über vordere und hintere Umlenkrollen (26) geführt sind.

9. Plattenbearbeitungsanlage nach Anspruch 7 oder 8, **dadurch gekennzeichnet, dass** zwischen den Transportbändern oder Transportketten (25) mindestens eine Messvorrichtung (31) zur Erfassung und Steuerung der Vorschubbewegung des Werkstücks (2) angeordnet ist.

## Claims

1. Panel-processing plant having a processing station for processing a panel-like workpiece (2) and a transport device for controlled displacement of the workpiece in at least one first linear axis (4) during processing of the workpiece (2) through the processing station, wherein the transport device has two transport units (1a, 1b) spaced from one another for displacement of the panel-like workpiece (2) over a gap (3) between the two transport units (1a, 1b) and the processing station contains two sets of processing machines (5a, 5b) arranged opposite one another at the gap (3), **characterised in that** the sets of processing machines (5a, 5b) have respectively a horizontal transverse support (9) which can be moved within the gap (3) above and below the workpiece (2) in a second linear axis (13) at right-angles to the first linear axis (4) and a third linear axis (15) at right-angles to the first and second linear axis (4, 13), on which transverse support (9) is arranged respectively a processing unit (6) rotatable about at least two rotational axes (18, 22) to receive a tool (8).

2. Panel-processing plant according to claim 1, **characterised in that** respectively one processing unit (6) is arranged to be rotatable about three rotational axes (18, 21, 22) on the horizontal transverse supports (9).

3. Panel-processing plant according to claim 2, **characterised in that** the processing unit (6) is arranged to be pivotable about a third rotational axis (22) spaced from the first rotational axis (18) on the free end of an arm (20) on the transverse support (9) rotatable about a first rotational axis (18) and a second rotational axis (21) perpendicular to the first rotational axis (18).

4. Panel-processing plant according to claim 3, **characterised in that** the arm (20) is arranged to be rotatable by 360° on a base surface (19) of a support part (17) projecting horizontally from the transverse support (9).

5. Panel-processing plant according to claim 4, **characterised in that** an axis (6) of a tool (8) arranged in the processing unit (6) lies in the same plane as the second rotational axis (21).

6. Panel-processing plant according to claim 4 or 5, **characterised in that** the arm (20) is arranged on the support part (17) so that the second rotational axis (21) and the third rotational axis (22) lie in one plane.

7. Panel-processing plant according to one of claims 1 to 6, **characterised in that** the transport unit (1a, 1b) contains several transport belts or transport chains (25) provided with a rest (24).

8. Panel-processing plant according to claim 7, **characterised in that** the transport belts or transport chains (25) are guided to be rotating over front and rear guide rollers (26).

9. Panel-processing plant according to claim 7 or 8, **characterised in that** at least one measuring device (31) for recording and controlling the feed movement of the workpiece (2) is arranged between the transport belts or transport chains (25).

## Revendications

1. Installation d'usinage de plaques avec un poste d'usinage pour usiner une pièce (2) en forme de plaque et un système de transport pour faire coulisser de manière commandée la pièce dans au moins un premier axe linéaire (4) au cours de l'usinage de la pièce (2) à travers le poste d'usinage, dans laquelle le système de transport présente deux unités de transport (1a, 1b) tenues à distance l'une de l'autre pour faire coulisser la pièce (2) en forme de plaque au-delà d'un espace intermédiaire (3) entre les deux unités de transport (1a, 1b) et le poste d'usinage contient deux modules d'usinage (5a, 5b) disposés de manière à se faire face l'un l'autre sur l'espace intermédiaire (3), **caractérisée en ce que** les modules d'usinage (5a, 5b) présentent respectivement une traverse horizontale (9) pouvant être déplacée au-dessus et sous la pièce (2) à l'intérieur de l'espace intermédiaire (3) dans un deuxième axe linéaire (13) à angle droit par rapport au premier axe linéaire (4) et un troisième axe linéaire (15) à angle droit par rapport au premier et au deuxième axe linéaire (4, 13), sur laquelle est disposée respectivement une unité d'usinage (6) pouvant tourner autour d'au moins deux axes de rotation (18, 22) pour recevoir un outil (8).

2. Installation d'usinage de plaques selon la revendication 1, **caractérisée en ce que** respectivement une unité d'usinage (6) est disposée de manière à pouvoir tourner autour de trois axes de rotation (18, 21, 22) sur les traverses horizontales (9).

3. Installation d'usinage de plaques selon la revendication 2, **caractérisée en ce que** l'unité d'usinage (6) est disposée de manière à pouvoir pivoter autour d'un troisième axe de rotation (22) tenu à distance du premier axe de rotation (18) sur l'extrémité libre d'un bras (20) pouvant tourner sur la traverse (9) autour d'un premier axe de rotation (18) et d'un deuxième axe de rotation (21) perpendiculaire par rapport au premier axe de rotation (18).

4. Installation d'usinage de plaques selon la revendication 3, **caractérisée en ce que** le bras (20) est disposé de manière à pouvoir tourner autour de 360° sur une surface d'appui (19) d'une partie de support (17) faisant saillie de manière horizontale de la traverse (9).

5. Installation d'usinage de plaques selon la revendication 4, **caractérisée en ce qu'**un axe (6) d'un outil (8) disposé dans l'unité d'usinage (6) se situe dans le même plan avec le deuxième axe de rotation (21).

6. Installation d'usinage de plaques selon la revendication 4 ou 5, **caractérisée en ce que** le bras (20) est disposé de telle sorte que la partie porteuse (17) que le deuxième axe de rotation (21) et le troisième axe de rotation (22) se situent dans un plan.

7. Installation d'usinage de plaques selon l'une quelconque des revendications 1 à 6, **caractérisée en ce que** l'unité de transport (1a, 1b) contient plusieurs bandes de transport ou chaînes de transport (25) pourvues d'un support (24).

8. Installation d'usinage de plaques selon la revendication 7, **caractérisée en ce que** les bandes de transport ou les chaînes de transport (25) sont guidées de manière périphérique par l'intermédiaire de galets de renvoi (26) avant et arrière.

9. Installation d'usinage de plaques selon la revendication 7 ou 8, **caractérisée en ce qu'**au moins un dispositif de mesure (31) pour détecter et commander le déplacement d'avancement de la pièce (2) est disposé entre les bandes de transport ou les chaînes de transport (25).
